(19) Europäisches Patentamt
European Patent Office
Office européen des brevets

(11) **EP 4 810 668 A1**

(12) **EUROPEAN PATENT APPLICATION**
published in accordance with Art. 153(4) EPC

(43) Date of publication:
**23.09.2026 Bulletin 2026/39**

(21) Application number: **24913650.8**

(22) Date of filing: **27.12.2024**

(51) International Patent Classification (IPC):
***C25B 11/031*** *(2021.01)* ***C25B 11/081*** *(2021.01)*
***C25B 1/04*** *(2021.01)* ***C25B 9/00*** *(2021.01)*

(52) Cooperative Patent Classification (CPC):
**C25B 1/04; C25B 9/00; C25B 11/031; C25B 11/081;** Y02E 60/36

(86) International application number:
**PCT/KR2024/021233**

(87) International publication number:
**WO 2025/143845 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 KR 20230194780**
**24.12.2024 KR 20240196240**

(71) Applicant: **Kolon Industries, Inc.**
**Seoul 07793 (KR)**

(72) Inventors:
- **LEE, Ju Sung**
  **Seoul 07793 (KR)**
- **KIM, Jun Young**
  **Seoul 07793 (KR)**
- **KIM, Jung Ho**
  **Seoul 07793 (KR)**
- **LIM, Youngjoon**
  **Seoul 07793 (KR)**
- **PARK, Hyun Jin**
  **Seoul 07793 (KR)**

(74) Representative: **Vossius & Partner Patentanwälte Rechtsanwälte mbB**
**Siebertstraße 3**
**81675 München (DE)**

(54) **REINFORCED COMPOSITE MEMBRANE FOR WATER ELECTROLYSIS CELL, MEMBRANE-ELECTRODE ASSEMBLY FOR WATER ELECTROLYSIS CELL COMPRISING SAME, AND WATER ELECTROLYSIS CELL COMPRISING SAME**

(57) The present invention relates to a reinforced composite membrane for a water electrolysis cell, a membrane-electrode assembly for a water electrolysis cell, comprising same, and a water electrolysis cell comprising same, wherein in the reinforced composite membrane for a water electrolysis cell, a porous support is arranged to be biased toward the surface adjacent to an oxygen evolution electrode before operation of the water electrolysis cell, on the basis of a prediction of the area that expands after the operation, the oxygen evolution electrode undergoing relatively greater expansion, thereby evenly distributing the expansion stress applied to the reinforced composite membrane for a water electrolysis cell after operation and improving the performance and durability of the membrane-electrode assembly and water electrolysis cell comprising same.

FIG. 1

100
S2
102
101
CL
102_2
101
102_1
L2
L3
L1
S1
D1
D2



Processed by Luminess, 75001 PARIS (FR)

## Description

[Technical Field]

The present disclosure relates to a reinforced composite membrane for a water electrolysis cell, a membrane-electrode assembly for a water electrolysis cell including the same, and a water electrolysis cell, and more particularly, to a reinforced composite membrane for a water electrolysis cell, a membrane-electrode assembly for a water electrolysis cell including the same, and a water electrolysis cell that equalize expansion stress received by the reinforced composite membrane for a water electrolysis cell after operating by predicting an area expanded after operating the water electrolysis cell and positioning a porous support, before operating, to be biased toward a surface adjacent to an oxygen evolution electrode that expands relatively significantly.

The present disclosure relates to a result of a project (Project No.: 20022451) conducted with the support of the Materials and Components Technology Development Program of the Ministry of Trade, Industry and Energy and the Korea Evaluation Institute of Industrial Technology (KEIT).

[Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

Types of the water electrolysis representatively include polymer electrolyte membrane (PEM), alkaline electrolysis (AEC), anion exchange membrane (AEM), and solid oxide electrolysis cells (SOECs) according to an electrolyte membrane.

In a system of a polymer electrolyte membrane water electrolysis cell (PEMWE) among them, a membrane-electrode assembly (MEA) actually generating hydrogen has a structure in which an oxygen evolution electrode that is an electrode where an oxygen evolution reaction occurs and a hydrogen evolution electrode where a hydrogen evolution reaction occurs are positioned with a polymer electrolyte membrane including a hydrogen ion conductive polymer interposed therebetween.

Water is supplied to the oxygen evolution electrode of such a polymer electrolyte membrane water electrolysis cell so that the oxygen evolution electrode is in contact with water, and the hydrogen evolution electrode is not in contact with water, so that a water content of the polymer electrolyte membrane has a concentration gradient in a thickness direction from the oxygen evolution electrode to the hydrogen evolution electrode. An expansion coefficient of the polymer electrolyte membrane varies according to the water content, and typically, as the water content increases, the expansion coefficient also tends to increase. Accordingly, after operating the water electrolysis cell, the degree of expansion of the polymer electrolyte membrane decreases along the thickness direction from the oxygen evolution electrode toward the hydrogen evolution electrode (Non-Patent Document 0001).

In a polymer electrolyte membrane comprising a support (hereinafter, a "reinforced composite membrane"), when the support is positioned at the center of the polymer electrolyte membrane during the manufacturing of the reinforced composite membrane, there is a problem that the performance of the reinforced composite membrane degrades due to asymmetric stress generated as the degree of expansion of the reinforced composite membrane adjacent to the oxygen evolution electrode after operating a water electrolysis cell comprising the reinforced composite membrane is greater than the degree of expansion of the reinforced composite membrane adjacent to the hydrogen evolution electrode.

Accordingly, there is a need to appropriately adjust a position of the support included in the reinforced composite membrane of the water electrolysis cell.

[Prior Art Document]

(Non-Patent Document 0001) Hwang, Gi Suk, et al. "Understanding water uptake and transport in nafion using x-

ray microtomography." ACS Macro Letters 2.4 (2013): 288-291.

[Disclosure]

[Technical Problem]

According to an embodiment, provided is a reinforced composite membrane for a water electrolysis cell that equalizes an expansion stress applied to the reinforced composite membrane for a water electrolysis cell by predicting an area expanded when operating a water electrolysis cell and positioning a porous support to be biased toward a surface adjacent to an oxygen evolution electrode that expands relatively largely.

According to another embodiment, provided are a membrane-electrode assembly and a water electrolysis cell comprising the reinforced composite membrane for a water electrolysis cell and having improved performance and durability.

[Technical Solution]

An embodiment provides a reinforced composite membrane for a water electrolysis cell comprising: a porous support comprising a plurality of pores and having a thickness in a first direction; and an ion conductor filling the pores of the porous support, wherein the reinforced composite membrane for a water electrolysis cell has a first surface and a second surface disposed to face each other in the first direction, and when a distance from the first surface to a center portion of the porous support is referred to as a 1-1 distance, and a distance from the second surface to the center portion of the porous support is referred to as a 1-2 distance, the 1-1 distance is greater than the 1-2 distance.

Another embodiment provides a membrane-electrode assembly for a water electrolysis cell comprising the reinforced composite membrane for a water electrolysis cell, a hydrogen evolution electrode positioned on the first surface S1, and an oxygen evolution electrode positioned on the second surface S2.

Another embodiment provides a water electrolysis cell comprising the membrane-electrode assembly.

[Advantageous Effects]

According to an embodiment, a reinforced composite membrane for a water electrolysis cell may equalize an expansion stress applied to the reinforced composite membrane for a water electrolysis cell by predicting an area expanded when operating a water electrolysis cell and positioning a porous support to be biased toward a surface adjacent to an oxygen evolution electrode that expands relatively largely, and a membrane-electrode assembly and a water electrolysis cell comprising the same may have improved performance and durability.

[Brief Description Of The Drawings]

FIG. 1 is a cross-sectional view showing a reinforced composite membrane for a water electrolysis cell according to an embodiment.

FIG. 2 is a graph showing the expansion coefficient of a reinforced composite membrane for a water electrolysis as a function of the thickness of the reinforced composite membrane for a water electrolysis cell according to an embodiment.

FIG. 3 is a graph showing performance evaluation results of Example 1 and Comparative Examples 1 and 2.

[Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" means a mixture, a laminate, a composite, a copolymer, an alloy, a blend, a reaction product, or the like of constituents.

In the present specification, terms such as "include", "comprise", or "have" are intended to designate the presence of implemented features, numbers, steps, components, or combinations thereof, and it should be understood that they do not preclude the possibility of the presence or addition of one or more other features, numbers, steps, components, or combinations thereof in advance.

In the present specification, terms are used only for the purpose of distinguishing one component from another

component. A singular expression includes a plural expression unless the context clearly indicates otherwise.

In the present specification, "first surface S1" and "second surface S2" are merely expressed as "first" and "second", respectively, in order to identify different surfaces, and do not indicate a priority between the surfaces.

In the present specification, "1-1 distance", "1-2 distance", "2-1 distance", and the like are merely expressed as "1-1", "1-2", "2-1", and the like, respectively, in order to identify different distances, and do not indicate a priority among the distances.

## Reinforced composite membrane for a water electrolysis cell

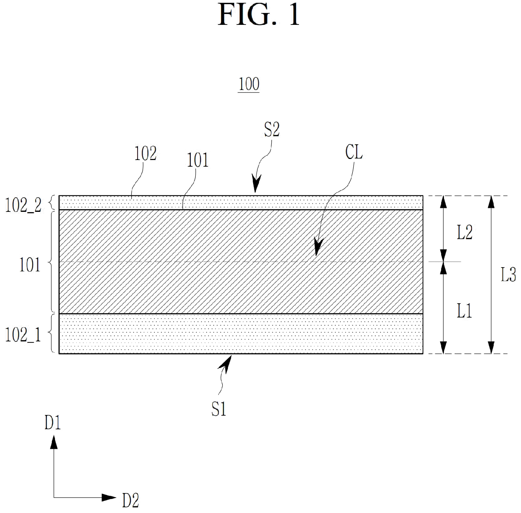

FIG. 1 is a cross-sectional view showing a reinforced composite membrane for a water electrolysis cell according to an embodiment. Hereinafter, the reinforced composite membrane for a water electrolysis cell will be described with reference to FIG. 1.

FIG. 1 is illustrated for convenience to easily understand the first surface S1, the second surface S2, the center portion of the porous support, the D1-axis direction, the D2-axis direction, and the like of the reinforced composite membrane for a water electrolysis cell, and it should be understood that what is shown in FIG. 1 does not indicate the thickness of the porous support, the thickness of the oxygen evolution electrode, and the thickness of the hydrogen evolution electrode, and the thickness of the porous support, the thickness of the oxygen evolution electrode, and the thickness of the hydrogen evolution electrode follow the description below.

A reinforced composite membrane for a water electrolysis cell (100) according to an embodiment comprises: a porous support (101) comprising a plurality of pores and having a thickness in a first direction; and an ion conductor (102) filling the pores of the porous support (101). When directions are defined to clearly describe the present embodiment, a D1 axis and a D2 axis shown in the drawings respectively indicate the thickness direction and the length direction of the porous support (101). Here, the thickness direction (the D1-axis direction) may be a direction perpendicular to wide surfaces (main surfaces) of sheet-shaped components. The length direction (the D2-axis direction) is a direction extending parallel to the wide surfaces (the main surfaces) of the sheet-shaped components, and may be a direction approximately perpendicular to the thickness direction (the D1-axis direction).

The reinforced composite membrane for a water electrolysis cell (100) has a first surface (S1) and a second surface (S2) disposed to face each other in the first direction (D1). The center portion (CL) of the porous support (101) is positioned at a middle (1/2) point of the porous support (101), and refers to an imaginary plane parallel to the first surface (S1) and the second surface (S2).

When a distance from the first surface (S1) to the center portion (CL) of the porous support is referred to as a 1-1 distance (L1), and a distance from the second surface (S2) to the center portion of the porous support is referred to as a 1-2 distance (L2), the 1-1 distance (L1) is greater than the 1-2 distance (L2). That is, the porous support is asymmetrically positioned in the reinforced composite membrane.

In the case of a water electrolysis cell, according to operation, the portion of the reinforced composite membrane for a water electrolysis cell adjacent to the oxygen evolution electrode into which water is injected is humidified and thus expands, but the portion of the reinforced composite membrane for a water electrolysis cell adjacent to the hydrogen evolution electrode is not humidified and thus does not expand. That is, a concentration gradient of the water content of the reinforced composite membrane occurs in the thickness direction from the hydrogen evolution electrode to the oxygen evolution electrode, and since the expansion coefficient increases as the water content increases, the degree of expansion is lower at the hydrogen evolution electrode having a lower water content than at the oxygen evolution electrode having a higher water content, which causes the degree of expansion stress to be non-uniform. A porous support included in a conventional reinforced composite membrane for a water electrolysis cell is disposed to be positioned at a center portion of the reinforced composite membrane, but in this case, during operation of the water electrolysis cell, the expansion stress received by the reinforced composite membrane is generated asymmetrically as described above, which may consequently result in a problem that the effect of the reinforced composite membrane is degraded.

Accordingly, the present inventors intend to provide a reinforced composite membrane that resolves non-uniformity of the expansion stress by determining a position of the porous support such that the degree of expansion stress is uniform, and disposing the porous support at the corresponding position.

### Determination of Position of Porous Support

According to an embodiment, a position of a porous support in a reinforced composite membrane for a water electrolysis cell may be determined according to the following description.

As described above, the water content in the thickness direction from the reinforced composite membrane for a water electrolysis cell adjacent to the hydrogen evolution electrode to the reinforced composite membrane for a water electrolysis cell adjacent to the oxygen evolution electrode may increase. Although the water content of the reinforced composite membrane in the thickness direction does not increase completely linearly, it exhibits a pattern similar to a linear

increase (Hwang, Gi Suk, et al. "Understanding water uptake and transport in nafion using x-ray microtomography." ACS Macro Letters 2.4 (2013): 288-291). In the present specification, it is premised that the water content in the thickness direction of the reinforced composite membrane linearly increases, and as the water content increases, the expansion coefficient also linearly increases. Based on this premise, the expansion coefficient in the thickness direction of the reinforced composite membrane may also increase linearly, which is shown in a graph.

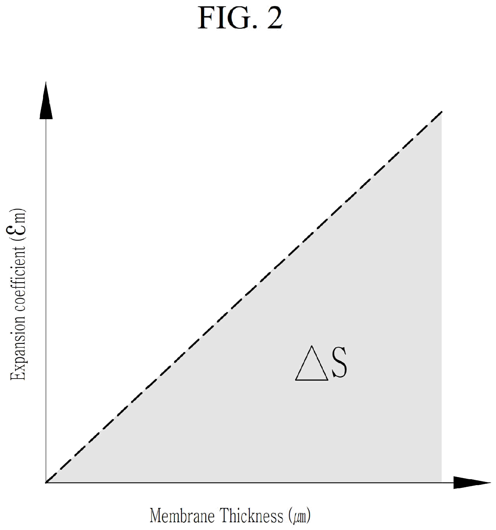

FIG. 2 is a graph showing the expansion coefficient at each point from the first surface to the second surface of the reinforced composite membrane for a water electrolysis cell (hereinafter, the thickness of the reinforced composite membrane for a water electrolysis cell). The graph shown in FIG. 2 is illustrated for convenience to explain that the expansion coefficient of the reinforced composite membrane for a water electrolysis cell may increase linearly, and a slope of the reinforced composite membrane for a water electrolysis cell is not limited to the slope of FIG. 2, but may vary depending on a kind of the ion conductor constituting the reinforced composite membrane, the thickness of the reinforced composite membrane, and the like.

Based on a first surface (S1), that is, a surface adjacent to a hydrogen evolution electrode in a reinforced composite membrane later, when the first surface (S1) is defined as x=0, an expansion coefficient thereof will be y=0, and when a second surface (S2), that is, a surface adjacent to an oxygen evolution electrode in the reinforced composite membrane later, is defined as $x=l_{mO}$, an expansion coefficient thereof will be $y=\varepsilon(\lambda_{max})$. Based on this premise, the graph of FIG. 2 may be derived, and by using this, a slope of the expansion coefficient with respect to a thickness of the reinforced composite membrane may be calculated, which is as in Equation 1 below.

[Equation 1]

$$\frac{\varepsilon(\lambda_{max})}{l_{m0}}=a$$

In Equation 1, $l_{mO}$ is a thickness of the reinforced composite membrane for a water electrolysis cell before operation, that is, before water is introduced and humidified or before expansion, $\varepsilon(\lambda_{max})$ is a thickness expansion coefficient at a maximum water content ($\lambda_{max}$) of the reinforced composite membrane for a water electrolysis cell, the maximum water content refers to the number of water molecules per ion-conductive group of the ion conductor, and the a is a positive number.

Through FIG. 2, an expansion thickness of the reinforced composite membrane for a water electrolysis cell may be derived, and the reinforced composite membrane for a water electrolysis cell may be expanded from a thickness ($l_{mO}$) of the reinforced composite membrane before humidification, that is, before expansion, by an area (ΔS) of a graph shown in FIG. 2. Here, the area (ΔS) according to FIG. 2 may be calculated by

$$l_{m0}\times\frac{\varepsilon(\lambda_{max})}{2}.$$

Accordingly, a total thickness of the reinforced composite membrane for a water electrolysis cell after operating may be calculated as in Equation 2 below.

[Equation 2]

$$l_m=l_{m0}\left(1+\frac{\varepsilon(\lambda_{max})}{2}\right)$$

In Equation 1, $l_{mO}$ is the thickness of the reinforced composite membrane for a water electrolysis cell before operation, $l_m$ is the thickness of the reinforced composite membrane for a water electrolysis cell after operation, and $\varepsilon(\lambda_{max})$ denotes the thickness expansion coefficient at the second surface adjacent to the oxygen evolution electrode.

By using a function of the expansion coefficient with respect to the thickness of the reinforced composite membrane for a water electrolysis cell, a distance to the first surface (S1) and a distance to the second surface (S2) based on the center portion (CL) of the porous support, along with the thickness of the reinforced composite membrane for a water electrolysis cell after the operating, may also be predicted. Specifically, the 1-1 distance (L1), which is the distance from the first surface (S1) to the center portion of the porous support (CL) before humidification, may be derived under a condition in which the 2-1 distance, which is the distance from the first surface (S1) to the center portion (CL) of the porous support after

humidification, is equal to the 2-2 distance, which is the distance from the second surface (S2) to the center portion (CL) of the porous support after humidification.

By using Equation 2, when the 2-1 distance, which is the distance from the first surface (S1) to the center portion (CL) of the porous support after the humidification, is represented on the left side of the equality sign of Equation 3, and the 2-2 distance, which is the distance from the second surface (S2) to the center portion (CL) of the porous support, is represented on the right side of the equality sign of Equation 3, it may be represented as in Equation 3 below.

[Equation 3]

$$x_a+\frac{x_a\varepsilon_a}{2}=(x_b-x_a)+(x_b-x_a)\varepsilon_a+\frac{(x_b-x_a)(\varepsilon_a-\varepsilon_b)}{2}$$

In Equation 3, $x_a$ is a position of a center (CL) of an initial porous support, $x_b$ is a position of a second surface (S2) before humidification, $\varepsilon_a$ is a thickness expansion coefficient at point $x_a$, and $\varepsilon_b$ is a thickness expansion coefficient at point $x_b$.

Rearranging Equation 3 with respect to $x_a$ yields Equation 4 below.

That is, the 1-1 distance (L1), which is the distance from the first surface (S1) to the center portion (CL) of the porous support, may satisfy Equation 4 below. When the 1-1 distance (L1) satisfies Equation 4 below, the expansion stress applied to the reinforced composite membrane for a water electrolysis cell after operating the water electrolysis cell may become uniform.

[Equation 4]

$$x_a=\frac{4-\sqrt{16+[8a(2x_b+ax_b^2)]}}{-4a}$$

In Equation 4, the $x_a$ is the 1-1 distance (L1), the $x_b$ is a distance from the first surface (S1) to the second surface (S2) (i.e., identical to a thickness of the reinforced composite membrane before operating), and the a is a slope of an expansion coefficient function with respect to the thickness of the reinforced composite membrane for a water electrolysis cell.

The position of the porous support may be positioned such that a ratio of $x_a$ according to Equation 4 to a distance from the first surface (S1) to the second surface (S2) is within a predetermined range.

For the ratio, for example, when the distance from the first surface (S1) to the center portion (CL) of the porous support is referred to as a 1-1 distance (L1) and the distance from the first surface (S1) to the second surface (S2) is referred to as a 1-3 distance (L3), a K value, which is a ratio of the 1-1 distance (L1) to the 1-3 distance (L3), may be calculated according to Equation 5 below, and the K value may be in a range of greater than 50% to 60% or less.

[Equation 5]

$$K=\frac{\sqrt{8\varepsilon(\lambda_{max})^2+16\varepsilon(\lambda_{max})+16}-4}{4\varepsilon(\lambda_{max})}$$

**In Equation** 5,

The $\varepsilon(\lambda_{max})$ refers to a thickness expansion coefficient at the maximum water content ($\lambda_{max}$) of the reinforced composite membrane for a water electrolysis cell, and the maximum water content means the number of water molecules per ion-conductive group of the ion conductor.

The Equation 5 is derived by dividing the expression represented by $x_a$ of the Equation 4 by $l_{mO}$ to derive the K value. That is, Equation 1 is substituted into a of Equation 4, and since $x_b$ in Equation 4 is equal to the distance from the first surface (S1) to the second surface (S2) before operation, i.e., the thickness ($l_{mO}$) of the reinforced composite membrane of the water electrolysis cell before operation, if the expression rearranged by substituting $l_{mO}$ instead of $x_b$ is divided by $l_{mO}$, it may be expressed as the Equation 5.

In order for the expansion stress applied to the reinforced composite membrane for a water electrolysis cell to be uniform, the K value may be within a predetermined range, and the porous support may be positioned such that the K value is in the predetermined range.

A lower limit of the K may be about 50.1%, 50.2%, 50.3%, 50.4%, 50.5%, 50.6%, 50.7%, 50.8%, 50.9%, 51%, 52%, 53%, 54%, 55%, 56%, 57%, 58%, 59%, or 60%, and an upper limit thereof may be about 60%, 59%, 58%, 57%, 56%, 55%, 54%, 53%, 52%, or 51%.

The K, on the premise of being greater than 50%, may be greater than or equal to, or greater than any one of the above-described lower limits; may be less than or equal to, or less than any one of the above-described upper limits; or may have a range of being greater than or equal to, or greater than any one of the above-described lower limits and less than or equal to, or less than any one of the above-described upper limits.

When the K is 50%, the porous support is positioned at the center between the first surface and the second surface, and thus is excluded.

In order to satisfy the above-described K value, the following parameters may be appropriately adjusted.

The expansion coefficient at the first surface S1 and the expansion coefficient at the second surface S2 may be appropriately adjusted.

For example, a lower limit of the expansion coefficient at the first surface S1 may be about 0, 0.01, 0.02, 0.03, 0.04, or 0.05, and an upper limit thereof may be 0.05, 0.04, 0.03, 0.02, 0.01, or 0.

In addition, a lower limit of the expansion coefficient at the second surface S2 may be about 0.05, 0.1, 0.15, 0.2, 0.25, 0.3, 0.35, 0.4, 0.45, 0.5, 0.55, 0.6, 0.65, or 0.7, and an upper limit thereof may be about 1, 0.95, 0.9, 0.85, 0.8, 0.75, or 0.7.

The expansion coefficients at the first surface (S1) and the second surface (S2) may respectively be greater than or equal to, or greater than any one of the above-described lower limits; be less than or equal to, or less than any one of the above-described upper limits; or have a range of greater than or equal to, or greater than any one of the above-described lower limits and less than or equal to, or less than any one of the above-described upper limits.

First and second ion conductor layers

According to an embodiment, a reinforced composite membrane for a water electrolysis cell may further include, in addition to an ion conductor filling pores of a porous support, a first ion conductor layer 102_1 positioned on one surface of the porous support and including the ion conductor, and a second ion conductor layer 102_2 positioned on the other surface of the porous support and including the ion conductor. That is, the porous support 101 may be positioned between the first ion conductor layer 102_1 and the second ion conductor layer 102_2.

In the "first ion conductor layer" and the "second ion conductor layer", "first" and "second" are used merely to identify that the ion conductor layers are separate and distinct, and do not indicate that the ion conductor layers are composed of different materials or indicate any priority.

Meanwhile, the first ion conductor layer (102_1) and the second ion conductor layer (102_2) may have different thicknesses from each other, as the reinforced composite membrane is manufactured according to the above-described method for determining the position of the porous support.

The thickness of the first ion conductor layer (102_1) may be a value calculated by subtracting 1/2 of the thickness of the porous support from the distance from the first surface to the center portion of the porous support, and the thickness of the second ion conductor layer (102_2) may be a value calculated by subtracting the value, which is obtained by subtracting 1/2 of the thickness of the porous support from the distance from the center portion of the porous support to the second surface, from the total thickness of the reinforced composite membrane. The thickness of the first ion conductor layer (102_1) may be greater than the thickness of the second ion conductor layer (102_2).

The first ion conductor layer (102_1) having a relatively large thickness may be positioned adjacent to the hydrogen evolution electrode, and the second ion conductor layer (102_2) having a relatively small thickness may be positioned adjacent to the oxygen evolution electrode. In this case, the membrane-electrode assembly comprises the reinforced composite membrane, in which an asymmetrical structure is implemented by positioning a porous support between ion conductor layers having different thicknesses from each other, and by disposing the oxygen evolution electrode on the second ion conductor layer having a relatively small thickness, non-uniformity of the expansion stress may be resolved, thereby improving performance and durability.

The ion conductor may comprise a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated poly-

etheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity.

In the ion conductor having hydrogen ion conductivity, H in the cation exchange group at a side chain terminal may be substituted with Na, K, Li, Cs, or tetrabutylammonium. When substituting H with Na in the ion exchange group at the side chain terminal, NaOH is used for substitution during the preparation of a catalyst composition, when substituting with tetrabutylammonium, tetrabutylammonium hydroxide is used for substitution, and K, Li, or Cs may also be substituted using an appropriate compound. Since this substitution method is widely known in the art, a detailed description thereof will be omitted in the present specification.

The ion conductor may be used in the form of a single substance or a mixture, and may also optionally be used together with a non-conductive compound to further improve adhesion with a polymer electrolyte membrane. The content of the non-conductive compound may be appropriately adjusted depending on the purpose of use.

As the non-conductive compound, at least one selected from polytetrafluoroethylene (PTFE), tetrafluoroethylene-hexafluoropropylene copolymer (FEP), tetrafluoroethylene-perfluoro alkyl vinyl ether copolymer (PFA), ethylene/-tetrafluoroethylene (ETFE), ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

The ion conductor included in the first ion conductor layer and the second ion conductor layer may be the same.

Porous support

The type of the porous support is not limited as long as it is applied to a water electrolysis cell, but for example, it may be a fluorine-based support or a nano-web support.

The fluorine-based support may correspond to, for example, expanded polytetrafluoroethylene (e-PTFE) having a microstructure of polymer fibrils or a microstructure in which nodes are connected to each other by the fibrils. In addition, a film having a microstructure of polymer fibrils in which the nodes do not exist may also be used as the porous support.

The fluorine-based support may comprise a perfluorinated polymer. The porous support may be formed by extruding dispersion-polymerized PTFE into a tape in the presence of a lubricant, and stretching a material obtained thereby to result in a more porous and stronger porous support.

In addition, an amorphous content of the PTFE may be increased by heat-treating the e-PTFE at a temperature greater than the melting point (about 342°C) of the PTFE. The e-PTFE film manufactured by the above method may have micropores having various diameters and a porosity. The e-PTFE film manufactured by the above method may have a porosity of at least 35 %, and a diameter of the micropores may be about 0.01 to 1 $\mu$m (micrometers).

The nano-web support may be a non-woven fibrous web comprising a plurality of randomly oriented fibers. The non-woven fibrous web refers to a sheet having a structure of individual fibers or filaments that are interlaid, but not in the same manner as a woven cloth. The non-woven fibrous web may be manufactured by carding, garneting, air-laying, wet-laying, melt blowing, spun bonding, or stitch bonding.

The fiber may comprise one or more polymer materials, and any material generally used as a fiber-forming polymer material may be used, and specifically, a hydrocarbon-based fiber-forming polymer material may be used. For example, the fiber-forming polymer material may include a polyolefin, such as polybutylene, polypropylene, and polyethylene, a polyester, such as polyethylene terephthalate and polybutylene terephthalate, a polyamide (nylon-6 and nylon-6,6), polyurethane, polybutene, polylactic acid, polyvinyl alcohol, polyphenylene sulfide, polysulfone, a liquid crystalline polymer, polyethylene-co-vinylacetate, polyacrylonitrile, a cyclic polyolefin, polyoxymethylene, a polyolefin-based thermoplastic elastomer, or a combination thereof. However, the technical idea of the present disclosure is not limited thereto.

The nano-web support may be a support in which nano fibers are integrated in a form of a non-woven fabric including a plurality of pores.

The nanofiber may preferably comprise a hydrocarbon-based polymer that exhibits excellent chemical resistance and hydrophobicity, such that the nanofiber is not prone to shape deformation due to moisture in a high humidity environment. Specifically, as the hydrocarbon-based polymer, nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, or a mixture thereof may be used.

The nano-web support is an aggregate of nano fibers in which nanofibers manufactured by electrospinning are

randomly arranged. In this case, the nanofiber may have an average diameter of 40 nm to 5000 nm, as calculated from an average obtained by measuring 50 fiber diameters using a scanning electron microscope (Scanning Electron Microscope, JSM6700F, JEOL) in consideration of the porosity and the thickness of the nano-web. When the average diameter of the nanofiber is within the range, mechanical strength may be excellent, and an appropriate porosity may be secured.

The thickness of the non-woven fibrous web may be 10 $\mu$m to 50 $\mu$m or 15 $\mu$m to 43 $\mu$m. When the thickness of the non-woven fibrous web is within the range, mechanical strength, weight reduction, and integration may be excellent.

The non-woven fibrous web may have a basic weight of 5 to 30 mg/cm$^2$. When the basic weight of the non-woven fibrous web is less than the numerical range, visible pores are formed, and thus it may be difficult to function as a porous support, and when the basic weight is greater than the numerical range, it may be manufactured in a form of paper or fabric in which pores are hardly formed.

The porosity may be calculated by a ratio of an air volume in the porous support to a total volume of the porous support according to Equation 1 below. At this time, the total volume may be calculated by preparing a rectangular sample and measuring a width, a length, and a thickness, and the air volume may be obtained by measuring a mass of the sample and then subtracting a polymer volume inversely calculated from a density from the total volume.

$$\text{Porosity (\%)} = (\text{Air volume in the porous support} / \text{Total volume of the porous support}) \times 100 \qquad \text{[Equation 1]}$$

For example, the porosity of the porous support may correspond to 30 to 90 %. When the porosity of the porous support is within the range, a problem of deteriorated impregnability of the ion conductor or a problem in which a post-process does not proceed smoothly due to deteriorated stability may be prevented.

**Membrane-electrode assembly for a water electrolysis cell**

According to an embodiment, a membrane-electrode assembly for a water electrolysis cell may comprise the reinforced composite membrane for a water electrolysis cell according to claim 1 having the first surface and the second surface facing each other in the first direction, a hydrogen evolution electrode positioned on the first surface, and an oxygen evolution electrode positioned on the second surface.

By applying the reinforced composite membrane for a water electrolysis cell, the expansion stress applied to the reinforced composite membrane for a water electrolysis cell may become uniform even after operating the water electrolysis cell, and thus performance and durability may be improved.

The oxygen evolution electrode and the hydrogen evolution electrode will be described below.

Oxygen evolution electrode and hydrogen evolution electrode

A catalyst layer included in the oxygen evolution electrode comprises a catalyst for an oxygen evolution reaction and an ion conductor, and the catalyst for an oxygen evolution reaction includes active particles comprising a noble metal oxide.

The type of the noble metal oxide is not limited as long as it may be generally applied to a catalyst for an oxygen evolution reaction of a water electrolysis cell.

For example, the noble metal oxide may include $IrO_x$ (wherein x is an integer of 1 to 3), $RuO_x$ (wherein x is an integer of 1 to 3), $IrMO_x$ (wherein M includes Ru, Pt, Sn, Se, Sb, Ta, Te, Nb, W, Zn, Au, or a combination thereof, and x is an integer of 1 to 3), or a combination thereof.

The catalyst for an oxygen evolution reaction may use only the active particles alone, or may further include a support supporting the active particles.

The type of the support is also not limited as long as it may be generally applied to a catalyst for an oxygen evolution reaction of a water electrolysis cell.

For example, the support may be a metal oxide, and the support may be titanium dioxide ($TiO_2$).

The ion conductor is included to improve adhesion of the catalyst layer and to transfer hydrogen ions.

The type of the ion conductor is the same as described in the first and second ion conductor layers of the reinforced composite membrane for a water electrolysis cell.

The ion conductor included in the oxygen evolution electrode and the ion conductor included in the reinforced composite membrane for a water electrolysis cell may be the same.

The hydrogen evolution electrode may include a catalyst for a hydrogen evolution reaction. The catalyst for a hydrogen evolution reaction may include active particles and a support supporting the active particles.

The active particles may include a noble metal.

For example, the noble metal may be a platinum-based noble metal.

As the platinum-based noble metal (platinum based precious metal), platinum (Pt) and/or a Pt-M alloy may be

used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nano fiber, carbon nano wire, carbon nano ball, carbon nano horn, carbon nano cage, carbon nano ring, ordered nano-/meso-porous carbon, carbon aerogel, mesoporous carbon, graphene, stabilized carbon, activated carbon, or a combination thereof.

The oxygen evolution electrode and the hydrogen evolution electrode may respectively include only a catalyst layer including a catalyst for an oxygen evolution reaction and a catalyst for a hydrogen evolution reaction, but may include an electrode substrate together with the catalyst layer.

In this case, the electrode substrate may serve to support the electrode while serving to diffuse a fuel and an oxidant into the catalyst layer.

As the electrode substrate, a known electrode substrate may be used without specific limitation, but specifically, there are carbon paper, carbon cloth, carbon felt, or metal cloth (referring to a porous film composed of a fibrous metal cloth or a cloth formed of polymer fibers having a metal film formed on a surface thereof) which may be used as a conductive base.

The electrode substrate may be one subjected to a water repellent treatment with a fluorine-based resin, and in this case, it is possible to prevent a decrease in reactant diffusion efficiency due to water generated after operating the water electrolysis cell.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

## Water electrolysis cell

A water electrolysis cell according to an embodiment may include the membrane-electrode assembly.

Since the water electrolysis cell is the same as a known one except for including the membrane-electrode assembly according to the present application, a detailed description thereof will be omitted.

[Mode for Invention]

Hereinafter, embodiments will be described in detail so that those of ordinary skill in the art to which the present disclosure pertains may easily implement them. However, the present disclosure may be implemented in various different forms and is not limited to the embodiments described herein.

## Example 1

### 1. Determination of Position of the Porous Support

First, assuming that the expansion coefficient according to the thickness of the reinforced composite membrane linearly increases, a slope (a) is calculated according to Equation 1.

As described below, since Nafion® D2020 is used as the ion conductor included in the reinforced composite membrane, the maximum expansion coefficient $\varepsilon(\lambda_{max})$ of Nafion® D2020 was 0.2, and since the thickness of the reinforced composite membrane before operating is 50 μm, the slope a of the expansion coefficient with respect to the thickness of the reinforced composite membrane is 0.004.

In Equation 4, the distance from the first surface to the second surface, i.e., the thickness $x_b$ of the reinforced composite membrane before operating, being 50 μm, and the value of a calculated above were respectively substituted to calculate the distance from the first surface to the center portion of the porous support, i.e., the 1-1 distance.

As a result, $x_a$ according to Equation 4 was 26.78 μm.

When the K value was calculated by substituting it into Equation 5, it was 53.57%, which satisfied the range of the above-described K value.

2. Manufacturing a Reinforced Composite Membrane for a Water Electrolysis Cell

Nafion® D2020 (20%, Chemours) was used as the ion conductor, and it was added to a mixture of 1-propanol, water, and ethanol at a weight ratio of 44:34:2 to prepare an ion conductor dispersion. Then, an e-PTFE film from Gore having a thickness of 10 μm, an average pore size of 0.2 μm, and a porosity of 70% was prepared as a porous support.
Initially, the ion conductor dispersion was applied onto a glass substrate according to a blade coating method by setting a coating speed to 3 mm/s, and then a planarization process was performed in a natural state for 5 minutes.
Then, the prepared e-PTFE film was positioned on the ion conductor dispersion cast on the glass substrate and was left for 10 minutes to allow an ion conductor dispersion to penetrate into the e-PTFE film. The ion conductor dispersion was applied on the e-PTFE film in the same manner as the initial application to manufacture a composite structure. At this time, during the primary coating, an application was performed such that the distance to the center portion of the porous support after a final drying was 26.78 μm, and during the secondary coating, an application was performed such that the distance to the center portion of the porous support after a final drying was 23.22 μm.
The composite structure was dried at 80 °C for 12 hours to remove the solvent, and thereafter, heat-treated at 150 °C for 30 minutes to manufacture a reinforced composite membrane.
The reinforced composite membrane has an asymmetric structure having different thicknesses based on the center portion of the porous support, and based on the center portion of the porous support, the thickness of a relatively thick ion conductor layer was 21.78 μm, and the thickness of a relatively thin ion conductor layer was 18.22 μm.

3. Manufacture of CCM (Catalyst Coated Membrane, catalyst coated reinforced composite membrane)

As a catalyst for an oxygen evolution electrode, a commercial $IrO_x$ black powder (Merck Sigma-Aldrich, Iridium(IV) oxide 206237) and Nafion as an ion conductor were mixed such that a weight ratio (catalyst:ion conductor) was 1:0.2, and ethanol was added as a solvent and dispersed by an ultrasonic treatment to manufacture a composition for forming a catalyst layer for an oxygen evolution electrode.
Meanwhile, as a catalyst for a hydrogen evolution electrode, a Pt/C catalyst having a Pt loading amount of 50 wt% and Nafion as an ion conductor were mixed such that a weight ratio (catalyst:ion conductor) was 1:1.2, and ethanol was added as a solvent and dispersed by an ultrasonic treatment to manufacture a composition for forming a catalyst layer for a hydrogen evolution electrode.
The manufactured reinforced composite membrane for a water electrolysis cell was positioned on a metal plate heated to 80 °C, and the composition for forming a catalyst layer for an oxygen evolution electrode was applied according to a spray coating method on the thinner ion conductor layer relative to the center portion of the porous support of the reinforced composite membrane such that the loading amount was 0.4 mg/cm$^2$, and the composition for forming a catalyst layer for a hydrogen evolution electrode was applied according to a spray coating method on the thicker ion conductor layer based on the center portion of the porous support of the reinforced composite membrane such that the loading amount was 0.15 mg/cm$^2$.
Thereafter, the reinforced composite membrane coated with the catalyst layers was hot pressed (hot press) at 180 °C under a pressure of 5 kN for 3 minutes to manufacture the CCM. In the catalyst layer for an oxygen evolution electrode, the weight ratio of the catalyst and the ion conductor was 85:15, and in the catalyst layer for a hydrogen evolution electrode, the weight ratio of the catalyst and the ion conductor was 70:30.

4. Manufacture of MEA (Membrane-Electrode Assembly)

In the manufactured CCM, a titanium fiber mesh having a porosity of 78%, a fiber diameter of 20 μm, and a thickness of 0.3 mm was positioned as a gas diffusion layer on the surface on which the catalyst layer for an oxygen evolution electrode was formed, and carbon paper was positioned as a gas diffusion layer on the surface on which the catalyst layer for a hydrogen evolution electrode was formed to manufacture the MEA. The active area of the final MEA was 9 cm$^2$.

**Comparative Example 1**

A reinforced composite membrane, a CCM, and an MEA were manufactured in the same manner as in Example 1, except that when manufacturing the reinforced composite membrane in Example 1, instead of positioning the porous support according to the determination of the position of the porous support, the ion conductor dispersion was applied such that, within the total 50 μm thickness of the reinforced composite membrane, the distance from the center of the porous support to one surface of the reinforced composite membrane was equal to the distance to the other surface thereof; that is, the thicknesses of the ion conductor layers positioned on both sides of the porous support were equal to each other.

**Comparative Example 2**

A reinforced composite membrane, a CCM, and an MEA were manufactured in the same manner as in Example 1, except that, during the manufacture of the reinforced composite membrane in Example 1, the porous support was positioned such that the K value, determined by the position of the porous support, was 65%, and the ion conductor dispersion was applied to form the ion conductor layers such that the distance from the porous support to one surface of the reinforced composite membrane was 32.5 μm, and the distance to the other surface was 17.5 μm, given a total thickness of 50 μm for the reinforced composite membrane. During the manufacture of the CCM, the hydrogen evolution electrode was manufactured to be positioned on the thicker ion conductor layer relative to the center portion of the porous support of the reinforced composite membrane.

Evaluation Example 1. Performance Evaluation

The membrane-electrode assemblies for a water electrolysis cell manufactured in Example 1 and Comparative Examples 1 to 2 were applied into a unit cell designed and manufactured for a water electrolysis cell, and measurements were performed by applying a protocol measuring voltage and resistance at a specific current from 1 mA to 200 A under conditions of a cell temperature of 80 °C, a water temperature of 80 °C, and a flow rate of 5 ml/min, and the measurements were stopped at 4.5 A/cm$^2$.

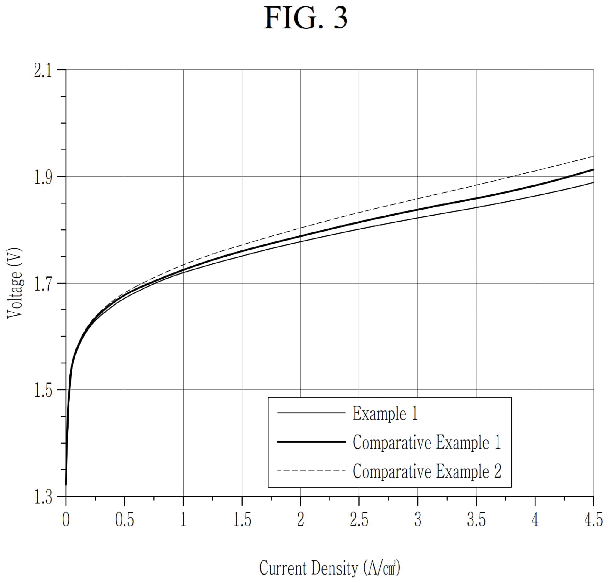

The results at this time are as shown in FIG. 3.

**Evaluation Example 2. Durability Evaluation**

The membrane-electrode assemblies for a water electrolysis cell manufactured in Example 1 and Comparative Examples 1 to 2 were applied into a unit cell designed and manufactured for a water electrolysis cell, and an initial voltage of the cell subjected to activation was measured under conditions of a cell temperature of 80 °C and a current density of 2 A/cm$^2$, and then the voltage was measured after operating a constant current for 3500 hours at a cell temperature of 80 °C and a current density of 2 A/cm$^2$.

The voltage was measured using a Potentiostat instrument from BioLogic, and the voltage increase rate was calculated according to Equation 2 below using the measured voltage. The results at this time are as shown in Table 2 below.

$$\text{Voltage increase rate (\%)} = (\text{voltage after operating} - \text{initial voltage}) / (\text{initial voltage}) \times 100 \quad \text{[Equation 2]}$$

[Table 2]

| | Example 1 | Comparative Example 1 | Comparative Example 2 |
|---|---|---|---|
| Voltage increase rate (%) | 3.15 | 3.86 | 5.44 |

**Conclusion**

Referring to FIG. 3, it may be seen that the membrane-electrode assembly of Example 1, including the reinforced composite membrane manufactured by positioning the porous support according to the determined position, exhibits a higher current density at the same voltage compared to the membrane-electrode assembly of Comparative Example 1, including the reinforced composite membrane manufactured by positioning the porous support in the middle of the reinforced composite membrane without following the determined position, and the membrane-electrode assembly of Comparative Example 2, including the reinforced composite membrane manufactured by positioning the porous support at 65% where the K value is outside an appropriate range discribed in the specification, thereby showing improved performance.

In addition, referring to Table 2, it may be seen that the membrane-electrode assembly of Example 1 including the reinforced composite membrane manufactured by positioning the porous support according to the determined position, exhibits a decreased voltage increase rate compared to the membrane-electrode assembly of Comparative Example 1, including the reinforced composite membrane manufactured by positioning the porous support in the middle of the reinforced composite membrane without following the determined position, and the membrane-electrode assembly of Comparative Example 2, including the reinforced composite membrane manufactured by positioning the porous support at 65% where the K value is outside an appropriate range described in the specification, thereby showing increased durability.

Thereby, it may be confirmed that in the case of a membrane-electrode assembly including a reinforced composite membrane manufactured by positioning the porous support as determined, the expansion stress applied to the reinforced composite membrane for a water electrolysis cell becomes uniform, thereby improving performance and durability.

Although the preferred embodiments have been described in detail above, the scope of rights is not limited thereto, and various modifications and improvements made by those skilled in the art using the basic concept defined in the following claims also fall within the scope of rights.

<Description of symbols>

100: reinforced composite membrane for a water electrolysis cell
102_1: first ion conductor layer
101: porous support
102_2: second ion conductor layer
102: ion conductor
S1: first surface
S2: second surface
CL: center portion of the porous support
L1: 1-1 distance
L2: 1-2 distance
L3: 1-3 distance

**Claims**

**1.** A reinforced composite membrane for a water electrolysis cell comprising:

a porous support comprising a plurality of pores and having a thickness in a first direction; and
an ion conductor filling the pores of the porous support,
wherein the reinforced composite membrane for a water electrolysis cell comprises:

a first surface and a second surface disposed to face each other in the first direction, and
when a distance from the first surface to a center portion of the porous support is referred to as a 1-1 distance, and a distance from the second surface to the center portion of the porous support is referred to as a 1-2 distance, the 1-1 distance is greater than the 1-2 distance.

**2.** The reinforced composite membrane for a water electrolysis cell of claim 1, wherein

when the distance from the first surface to the center portion of the porous support is referred to as the 1-1 distance, and
a distance from the first surface to the second surface is referred to as a 1-3 distance,
a K value, which is a ratio of the 1-1 distance to the 1-3 distance, is calculated according to Equation 5 below, and the K value is in a range of greater than 50% to less than or equal to 60%:

[Equation 5]

$$K=\frac{\sqrt{8\varepsilon(\lambda_{max})^2+16\varepsilon(\lambda_{max})+16}-4}{4\varepsilon(\lambda_{max})}$$

In Equation 5, wherein
the $\varepsilon(\lambda_{max})$ refers to a thickness expansion coefficient at a maximum water content ($\lambda_{max}$) of the reinforced composite membrane for the water electrolysis cell, and the maximum water content refers to the number of water molecules per ion-conductive group of the ion conductor.

3. The reinforced composite membrane for a water electrolysis cell of claim 1, further comprising:a first ion conductor layer positioned on one surface of the porous support and comprising the ion conductor, and

a second ion conductor layer positioned on the other surface of the porous support and comprising the ion conductor, wherein
the porous support is positioned between the first ion conductor layer and the second ion conductor layer.

4. The reinforced composite membrane for a water electrolysis cell of claim 3, wherein
a thickness of the first ion conductor layer is greater than a thickness of the second ion conductor layer.

5. A membrane-electrode assembly for a water electrolysis cell comprising:

the reinforced composite membrane for a water electrolysis cell of claim 1,
a hydrogen evolution electrode positioned on the first surface, and
an oxygen evolution electrode positioned on the second surface.

6. The membrane-electrode assembly for a water electrolysis cell of claim 5, wherein
the oxygen evolution electrode comprises a catalyst for an oxygen evolution reaction comprising active particles comprising a noble metal oxide, and an ion conductor.

7. The membrane-electrode assembly for a water electrolysis cell of claim 6, wherein

the catalyst for an oxygen evolution reaction further comprises a support supporting the active particles, and
the support is titanium dioxide ($TiO_2$).

8. The membrane-electrode assembly for a water electrolysis cell of claim 5, wherein

the hydrogen evolution electrode comprises a carbon-based support, and active particles supported on the carbon-based support, wherein
the active particles comprise a noble metal.

9. A water electrolysis cell comprising the membrane-electrode assembly for a water electrolysis cell according to claim 5.

# FIG. 1

100
S2
102
101
CL
102_2
101
102_1
L2
L3
L1
S1
D1
D2

FIG. 2

Expansion coefficient (Ɛm)
△S
Membrane Thickness (㎛)

FIG. 3

2.1
1.9
1.7
1.5
1.3
Voltage (V)
0
0.5
1
1.5
2
2.5
3
3.5
4
4.5
Current Density (A/cm²)
Example 1
Comparative Example 1
Comparative Example 2

**INTERNATIONAL SEARCH REPORT**

International application No. **PCT/KR2024/021233**

**A. CLASSIFICATION OF SUBJECT MATTER**

**C25B 11/031**(2021.01)i; **C25B 11/081**(2021.01)i; **C25B 1/04**(2006.01)i; **C25B 9/00**(2006.01)i

According to International Patent Classification (IPC) or to both national classification and IPC

**B. FIELDS SEARCHED**

Minimum documentation searched (classification system followed by classification symbols)

C25B 11/031(2021.01); B01D 69/12(2006.01); C25B 1/04(2006.01); C25B 13/02(2006.01); C25B 13/04(2006.01); C25B 9/23(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수전해셀(water electrolysis cell), 막-전극 어셈블리(membrane-electrode assembly), 강화 복합막(reinforced composite membrane), 공극(pore), 다공성 지지체(porous support), 이온전도체(ion conductor), 두께(thickness)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2023-0075790 A (KOREA INSTITUTE OF SCIENCE AND TECHNOLOGY) 31 May 2023 (2023-05-31)<br>See claims 1 and 8; paragraphs [0107] and [0108]; and figure 2. | 1,3-9<br>2 |
| Y | KR 10-2021-0113979 A (JOHNSON MATTHEY FUEL CELLS LIMITED) 17 September 2021 (2021-09-17)<br>See claims 1 and 14; paragraphs [0045]-[0050]; and figure 1. | 1,3-9 |
| A | KR 10-2023-0148522 A (KOREA ELECTRIC POWER CORPORATION) 25 October 2023 (2023-10-25)<br>See abstract; claims 1-4; and paragraphs [0048]-[0055]. | 1-9 |
| A | KR 10-2023-0137983 A (PLUG POWER INC.) 05 October 2023 (2023-10-05)<br>See abstract; and claims 1-30. | 1-9 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 April 2025** | **11 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/021233**

**C. DOCUMENTS CONSIDERED TO BE RELEVANT**

| Category* | Citation of document, with indication, where appropriate, of the relevant passages | Relevant to claim No. |
|---|---|---|
| A | KR 10-1746591 B1 (INNOCHEMTECH CO., LTD.) 14 June 2017 (2017-06-14)<br>See abstract; and claims 1, 4-9 and 11-16. | 1-9 |
| DA | HWANG, G. S. et al. Understanding Water Uptake and Transport in Nafion Using X-ray Microtomography. ACS Macro Letters. 2013, vol. 2, pp. 288-291.<br>See abstract; and pages 288-291. | 1-9 |

Form PCT/ISA/210 (second sheet) (July 2022)

**INTERNATIONAL SEARCH REPORT**
**Information on patent family members**

International application No.
**PCT/KR2024/021233**

| Patent document cited in search report | Publication date (day/month/year) | Patent family member(s) | Publication date (day/month/year) |
|---|---|---|---|
| KR 10-2023-0075790 A | 31 May 2023 | KR 10-2672550 B1 | 07 June 2024 |
| | | US 2025-0019847 A1 | 16 January 2025 |
| | | WO 2023-096114 A1 | 01 June 2023 |
| KR 10-2021-0113979 A | 17 September 2021 | CN 113169346 A | 23 July 2021 |
| | | EP 3912213 A1 | 24 November 2021 |
| | | EP 3912213 B1 | 01 January 2025 |
| | | JP 2022-517516 A | 09 March 2022 |
| | | JP 7496359 B2 | 06 June 2024 |
| | | US 2021-0384540 A1 | 09 December 2021 |
| | | WO 2020-148545 A1 | 23 July 2020 |
| KR 10-2023-0148522 A | 25 October 2023 | None | |
| KR 10-2023-0137983 A | 05 October 2023 | CN 116917547 A | 20 October 2023 |
| | | CN 116963824 A | 27 October 2023 |
| | | EP 4288191 A1 | 13 December 2023 |
| | | EP 4288590 A1 | 13 December 2023 |
| | | JP 2024-505118 A | 02 February 2024 |
| | | JP 2024-506756 A | 14 February 2024 |
| | | KR 10-2023-0142761 A | 11 October 2023 |
| | | US 2022-0243339 A1 | 04 August 2022 |
| | | US 2022-0243344 A1 | 04 August 2022 |
| | | WO 2022-169844 A1 | 11 August 2022 |
| | | WO 2022-169851 A1 | 11 August 2022 |
| KR 10-1746591 B1 | 14 June 2017 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HWANG, GI SUK et al.** Understanding water uptake and transport in nafion using x-ray microtomography.. *ACS Macro Letters*, 2013, vol. 2 (4), 288-291